# EUROPÄISCHE PATENTANMELDUNG

(11) **EP 2 363 311 A1**
(43) Veröffentlichungstag der Anmeldung: **07.09.2011**
(21) Anmeldenummer: 11001287.9
(22) Anmeldetag: 17.02.2011
(51) Int. Cl.: B60J 7/12, F16C 11/06

(54) **Gelenkstange für Stellvorgänge**

(30) Priorität: 27.02.2010 DE 102010009624
(71) Anmelder: Magna Car Top Systems GmbH, 74321 Bietigheim-Bissingen (DE)
(72) Erfinder: Schumacher, Thorsten, Dipl.-Ing. (FH), 25495 Kummerfeld (DE)

(57) **Zusammenfassung**

Diese Gelenkstange (1) ist für Stellvorgänge wenigstens einer beweglichen Einrichtung, insbesondere Verschlussvorrichtung eines Personenkraftwagens, ausgebildet, welche Gelenkstange zumindest an einem Ende ein Kugelgelenksystem (6,7) mit einem aus Kunststoff hergestellten Kugelaufnahmeelement (8) für einen Kugelzapfen (9) umfasst, wobei das Kugelaufnahmeelement eine Kugelpfanne und einen Verbindungsschaft (11) aufweist, der mit einem Stangenelement der Gelenkstange fest verbunden ist.

Zur Optimierung der Gelenkstange ragt das Kugelaufnahmeelement (8) mit dem Verbindungsschaft (11) in einen Rohrendbereich (13) des Stangenelements hinein, und es werden der Rohrendbereich des Stangenelements und der Verbindungsabschnitt des Kugelaufnahmeelements über eine Formschlussverbindungsvorrichtung in Lage gehalten.

## Beschreibung

Die Erfindung bezieht sich auf eine Gelenkstange für Stellvorgänge wenigstens einer beweglichen Einrichtung, insbesondere Verschlussvorrichtung für ein Faltverdeck eines Personenkraftwagens, nach dem Oberbegriff des Patenanspruchs 1.

Es ist eine Kugelpfanne als Lager eines Kugelbolzens zur Bildung eines Kugelgelenks bekannt, CH 503 917, wobei die Kugelpfanne einen Kugelpfannenkörper aus Kunststoff aufweist. Der Kugelpfannenkörper besteht aus zwei gegeneinander geklappten Hälften, die durch einen dünnwandigen Steg miteinander verbunden sind. Die zusammengeklappten Hälften werden mittels einer Klammer in Lage gehalten.

Aus der DE 699 25 560 T2 geht ein Pleuel mit zwei Kugelabschnitten und korrespondierenden Kugelaufnahmeabschnitten hervor. Jeder Kugelabschnitt ist mit einem Gewindeschaft versehen, der ein Außengewinde besitzt. Der Gewindeschaft ist mit einem Gestänge verbindbar, das ein Innengewinde für das Außengewinde des Gewindeschafts besitzt.

Die DE 36 05 862 A1 gibt eine Kugelkopfkupplung für Bowdenzüge, insbesondere zur Herstellung einer Verbindung zwischen Stell- und Regelgliedern in Kraftfahrzeugen wieder. Einer der Bowdenzüge ist mit einem eine Kugelpfanne aufweisenden Endstück versehen; das jeweilige Stellglied bzw. Regelglied mit einem in der Kugelpfanne gehaltenen Kugelkopf.

In der DE 196 16 255 C1 wird ein Faltverdeck für Fahrzeuge mit einem heckseitigen, einen hinteren Rand eines Verdeckbezugs aufnehmenden Spannbügel behandelt. Der Spannbügel stützt sich in einer Schließstellung des Faltverdecks unter Zwischenschaltung eines Dichtkörpers an einer Unterseite eines Aufbauteils ab. Zwischen Spannbügel und dem feststehenden Aufbauteil ist eine Entlastungseinrichtung vorgesehen, die ein aufrecht verlaufendes Spannseil besitzt. An beiden Enden des Spannseils sind Kugelkopfverbindungen vorgesehen.

Es ist Aufgabe der Erfindung, eine Gelenkstange mit wenigstens einer Kugelgelenkverbindung, umfassend ein Kugelaufnahmeelement für einen Kugelzapfen mit einem Verbindungszapfen und ein Stangenelement, zu konzipieren, die sich durch aufwandsarme Herstellung und sichere Kraftübertragung auszeichnen. Dabei sollte aber auch sichergestellt sein, dass die Gelenkstange hinsichtlich niedrigen Gewichts optimiert ist.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Gelenkstange mit dem Kugelaufnahmeelement und dem z.B. aus Leichtmetall hergestellten Stangenelement eine Hybridkonstruktion darstellt, die hinsichtlich Kraftübertragung und niedrigem Gewicht Maßstäbe setzt. Dabei sind sowohl das Kugelaufnahmeelement mit dem Verbindungsschaft wie auch das Stangenelement einfache Bauteile, die auf wirtschaftliche Weise herstellbar sind und zur kostengünstigen Fertigung der Gelenkstange beitragen. Musterhaft ausgeführt sind auch die Formschlussverbindungen zwischen Rohrendbereich des Stangenelements und dem Verbindungsschaft. Dank der hoch belastbaren Formschlussverbindungen der Formschlussverbindungsvorrichtung können auch festigkeitsbeeinträchtigende und Bearbeitungskosten verursachende Außengewinde am Verbindungsschaft bzw. Innengewinde im Rohrendbereich entfallen. Schließlich eignet sich Polyamid wie auch Ultramid® vorzüglich als Werkstoff für den Verbindungsschaft des Kugelaufnahmeelements, denn in die Ausnehmungen des Verbindungsschafts lassen sich die Einformungen des Rohrendbereichs des Stangenelements durch Einpressen vorbildlich mittels Stempel eines entsprechend gestalteten Werkzeugs einpressen.

In der Zeichnung wird ein Ausführungsbeispiel der Erfindung gezeigt, das nachstehend näher erläutert wird.

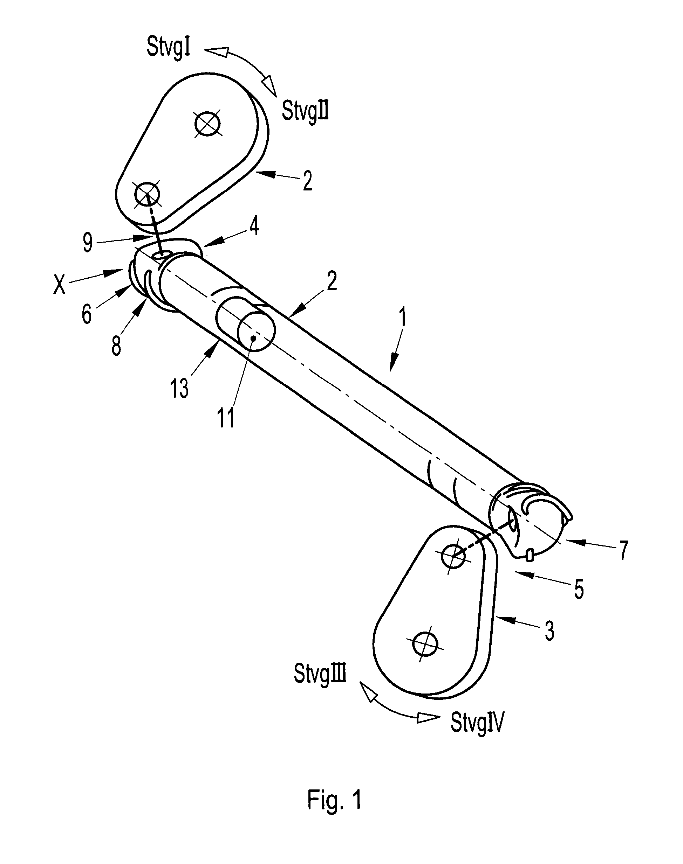

Es zeigen
Fig. 1 eine schematische Schrägansicht auf eine Gelenkstange für Stellbewegungen,
Fig. 2 eine Einzelheit X der Fig. 1 mit einem Kugelaufnahmeelement und einem Stangenelement teilweise im Schnitt,
Fig. 3 einen Schnitt nach der Linie III-III der Fig. 2,
Fig. 4 einen Schnitt nach der Linie IV-IV der Fig. 2,
Fig. 5 einen Schnitt nach der Linie V-V der Fig. 2,
Fig. 6 einen Schnitt nach der Linie VI-VI der Fig. 2,
Fig. 7 eine Prinzipdarstellung eines Werkzeugs zur Herstellung von Formschlussverbindungsvorrichtungen zwischen dem Kugelaufnahmeelement und dem Stangenelement.

Eine bspw. gerade Gelenkstange 1 ist für Stellvorgänge Stvgl-Stvgll und Stvglll-StvgIV von beweglichen Einrichtungen 2 und 3 ausgebildet, die z.B. Bestandteil einer nicht näher dargestellten Verschlussvorrichtung sein können. Hierzu sind an Enden 4 und 5 der Gelenkstange 1 Kugelgelenksysteme 6 und 7 vorgesehen. Jedes Kugelgelenksystem -z.B. 6- umfasst ein Kugelaufnahmeelement 8 für einen Kugelzapfen 9. Das Kugelaufnahmeelement 8 weist eine Kugelpfanne 10 und einen Verbindungsschaft 11 auf, der mit einem Stangenelement 12 der Gelenkstange 1 fest verbunden ist. Kugelpfanne 10 und Verbindungsschaft 11 des Kugelaufnahmeelements 8 sind aus einem Stück hergestellt, und das Kugelaufnahmeelement 8 besteht aus Kunststoff wie Polyamid, Ultramid® oder dgl., wobei es zur Aufnahme des Kugelzapfens 9 dient, der aus Kunststoff oder Metall hergestellt sein kann.

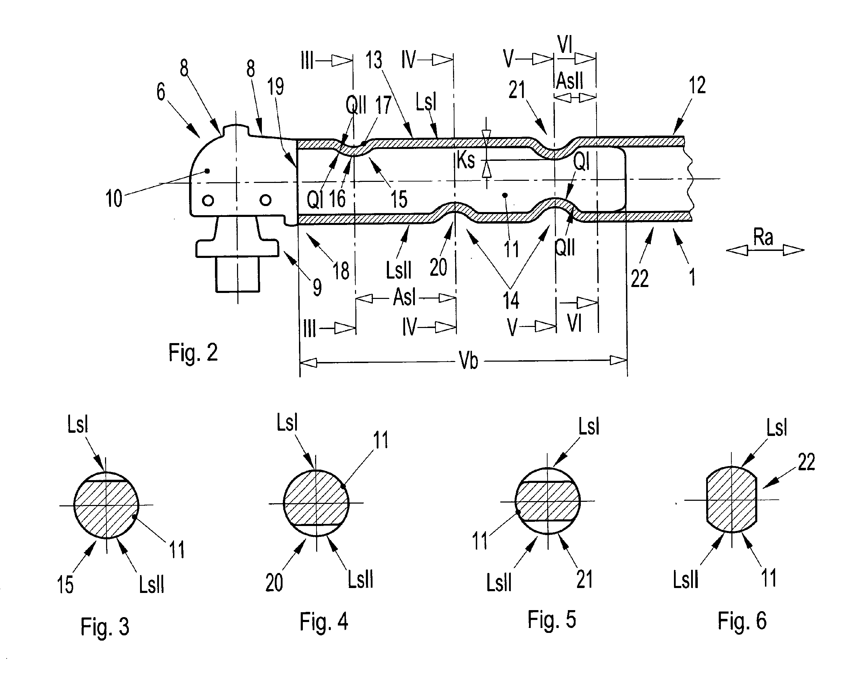

Das Kugelaufnahmeelement 8 ragt mit dem Verbindungsschaft 11, der die Länge Vb besitzt -Fig. 2, in einen Rohrendbereich 13 des Stangenelements 12 hinein. Der Rohrendbereich 13 des Stangenelements 12 und der Verbindungsschaft 11 des Kugelaufnahmeelements 8 werden gegenseitig über eine Formschlussverbindungsvorrichtung 14 -Fig. 2- in Lage gehalten. Der einen kreisringförmigen Querschnitt besitzende und aus Metall bestehende Rohrendbereich 13 ist aus einem Stück mit dem durch einen Rohrabschnitt gebildeten Stangenelement 12 gefertigt. Dabei umfasst die Formschlussverbindungsvorrichtung 14 wenigstens eine Formschlussverbindung 15, die durch eine Ausnehmung 16 im Verbindungsschaft 11 und eine Einformung 17 im Rohrendbereich 13 gebildet wird. Die Ausnehmung 16 und die Einformung 17 verfügen über korrespondierende Querschnitte QI≈QII.

Ein gezielt fester Zusammenbau von Verbindungsschaft 11 und Rohrendbereich 13, der sich mit einem der Kugelpfanne 10 zugekehrten Ende 18 an einem Anschlag 19 des Kugelaufnahmeelements 8 abstützt, wird erreicht, wenn in axialer Richtung Ra des Verbindungsschafts 11 bzw. des Rohrendbereichs 13 verteilt mehrere Formschlussverbindungen 15, 20, 21 und 22 die Formschlussverbindungsvorrichtung 14 bilden. Ein Teil der mit axialem Abstand AsI zueinander angeordneten Formschlussverbindungen -bspw. 15 und 20- ist lediglich von einer der radial gegenüberliegenden Längsseiten LsI oder LsII des Stangenelements 12 bzw. des Rohrendbereichs 13 aus nach Art von Kreissegmenten Ks in den Rohrendbereich 11 bzw. den Verbindungsschaft 11 eingebracht. Dagegen sind die Formschlussverbindungen 21 und 22 radial von beiden besagten Längsseiten Lsl und LsII aus eingeformt. Dabei sind die Formschlussverbindungen 21 und 22 mit Abstand AsII und um 90° versetzt zueinander angeordnet -Fig. 5 und 6.

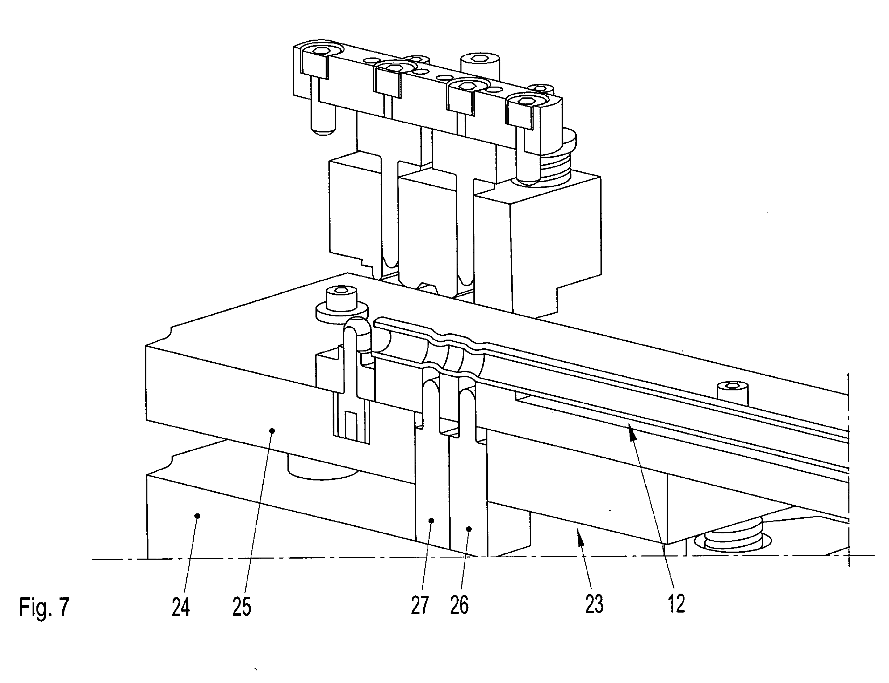

In Fig. 7 ist ein Werkzeug 23 mit einem Unterteil 24 und einem Oberteil 25 dargestellt. In dem Werkzeug 23 angedeutet ist das horizontal verlaufende Stangenelement 12 der Gelenkstange 1. Im Untereil 24 und im Oberteil 25 sind Stempel 26 und 27 bzw. 28 und 29 vorgesehen, mit denen die Einformungen 17 des Rohrendbereichs 13 der Formschlussverbindungen 15, 21, 23 und 24 -Fig. 2- zum Eingriff in die Ausnehmungen 17 des Verbindungsschafts 11 erzeugt werden.

Für die Herstellung der Formschlussverbindungen 15, 20, 21 und 22 zwischen Rohrendbereich 13 und Verbindungsschaft 11 eignen sich folgende Verfahrenschritte:
● im vorgefertigten Zustand wird das Kugelaufnahmeelement 8 mit dem Verbindungsschaft 11 in den Rohrendbereich 13 des Stangenelements 12 eingeführt,
● das Kugelaufnahmeelement 8 und das Stangenelement 11 werden im zusammengesetzten Zustand in das Werkzeug 23 eingebracht,
● Stempel 26 und 27 bzw. 28 und 29 des Werkzeugs 23 erzeugen die Einformungen 18 des Rohrendbereichs 13 in den Ausnehmungen 17 des Verbindungsschafts 11.

## Patentansprüche

1. Gelenkstange für Stellvorgänge wenigstens einer beweglichen Einrichtung, insbesondere Verschlussvorrichtung eines Personenkraftwagens, welche Gelenkstange zumindest an einem Ende ein Kugelgelenksystem mit einem aus Kunststoff hergestellten Kugelaufnahmeelement für einen Kugelzapfen umfasst, wobei das Kugelaufnahmeelement eine Kugelpfanne und einen Verbindungsschaft aufweist, der mit einem Stangenelement der Gelenkstange fest verbunden ist, **dadurch gekennzeichnet, dass** das Kugelaufnahmeelement (8) mit dem Verbindungsschaft (11) in einen Rohrendbereich (13) des Stangenelements (12) hineinragt und dass der Rohrendbereich (13) des Stangenelements (12) und der Verbindungschaft (11) des Kugelaufnahmeelements (8) über eine Formschlussverbindungsvorrichtung (14) in Lage gehalten wird.

2. Gelenkstange nach Anspruch 1, **dadurch gekennzeichnet, dass** zumindest der bspw. Kreisform aufweisende Rohrendbereich (13) des Stangenelements (12) aus Metall besteht.

3. Gelenkstange nach den Ansprüchen 1 und 2, **dadurch gekennzeichnet, dass** die Formschlussverbindungsvorrichtung (14) wenigstens eine Formschlussverbindung (z.B. 15) umfasst, die durch eine Ausnehmung (16) im Verbindungsschaft (11) und eine Einformung (17) im Rohrendbereich (13) gebildet wird.

4. Gelenkstange nach Anspruch 3, **dadurch gekennzeichnet, dass** die Ausnehmung im Verbindungsschaft (11) und die Einformung (17) im Rohrendbereich (13) korrespondierende Querschnitte (QI und QII) aufweisen.

5. Gelenkstange nach einem oder mehreren der vorangehenden Ansprüche, **dadurch gekennzeichnet, dass** in axialer Richtung (Ra) des Verbindungsschafts (11) verteilt mehrere beabstandete Formschlussverbindungen (15; 20, 21 und 22) zwischen Verbindungsschaft (11) und Rohrendabschnitt (13) vorgesehen sind.

6. Gelenkstange nach den Ansprüchen 2 und 5, **dadurch gekennzeichnet, dass** ein Teil der Formschlussverbindungen (15 und 20) lediglich von einer Längsseite (Lsl oder LsII) des Stangenelements (12) aus nach Art von Kreissegmenten (Ks) in den Rohrendbereich (13) bzw. den Verbindungsschaft (11) eingebracht ist.

7. Gelenkstange nach Anspruch 6, **dadurch gekennzeichnet, dass** die Formschlussverbindungen (15, 20, 21 und 22) in axialer Richtung (Ra) des Stangenelements (12) mit Abstand (AsI und AsII) zueinander angeordnet sind.

8. Gelenkstange nach Anspruch 5, **dadurch gekennzeichnet, dass** ein Teil der Formschlussverbindungen (21 und 22) von radial gegenüberliegenden Längsseiten (Lsl und LsII) des Stangenelements (12) aus eingearbeitet sind.

9. Gelenkstange nach Anspruch 8, **dadurch gekennzeichnet, dass** ein Teil der radial gegenüberliegenden Formschlussverbindungen (21 und 22) in axialer Richtung (Ra) und um 90° versetzt zueinander angeordnet sind.

10. Gelenkstange nach einem oder mehreren der vorangehenden Ansprüche, **dadurch gekennzeichnet, dass** das Kugelaufnahmeelement (8) aus Polyamid oder einem vergleichbaren Werkstoff besteht.

11. Verfahren zur Herstellung der Formschlussverbindungen nach einem oder mehreren der vorangehenden Ansprüche **dadurch gekennzeichnet, dass**
● Im vorgefertigten Zustand das Kugelaufnahmeelement (8) mit dem Verbindungsschaft (11) in den Rohrendbereich (13) des Stangenelements (12) eingeführt wird,
● das Kugelaufnahmeelement (8) und das Stangenelement (12) im zusammengesetzten Zustand in ein Werkzeug (23) eingebracht werden,
● Stempel (26, 27, 28 und 29) des Werkzeugs (23) die Einformungen (17) des Rohrendbereichs (13) in die Ausnehmungen (16) des Verbindungsschafts (11) erzeugen.
